# FASCICULE DE BREVET EUROPEEN

(11) **EP 2 965 958 B1**
(45) Date de publication et mention de la délivrance du brevet: **10.04.2019**
(21) Numéro de dépôt: 15171270.0
(22) Date de dépôt: 09.06.2015
(51) Int. Cl.: B60S 1/52, B60S 1/38, B60S 1/40

(54) **ENSEMBLE COMPORTANT UN CONNECTEUR MÉCANIQUE ET UNE CANULE POUR UN BALAI D'ESSUIE-GLACE DE VÉHICULE**
EINHEIT AUS EINEM MECHANISCHEN ANSCHLUSS UND EINER KANÜLE FÜR EIN SCHEIBENWISCHERBLATT EINES FAHRZEUGS
ASSEMBLY COMPRISING A MECHANICAL CONNECTOR AND A CANNULA FOR A VEHICLE WINDSCREEN-WIPER BLADE

(30) Priorité: 11.07.2014 FR 1456722
(43) Date de publication de la demande: 13.01.2016
(73) Titulaire: Valeo Systèmes d'Essuyage, 78322 Le Mesnil Saint Denis (FR)
(72) Inventeur: Barret, Guillaume, 63270 LAPS (FR)
(74) Mandataire: Callu-Danseux, Violaine

(56) Documents cités:
- DE-A1-102004 056 835
- DE-A1-102012 216 745
- DE-B- 1 077 087
- US-A- 4 339 839
- US-A1- 2006 265 830
- US-A1- 2011 271 478

## Description

La présente invention concerne un ensemble comportant un connecteur mécanique et une canule pour un balai d'essuie-glace d'une vitre, en particulier arrière, de véhicule, par exemple automobile. La présente invention concerne en outre un balai d'essuie-glace d'une vitre de véhicule comportant un tel ensemble.

Une automobile est classiquement équipée d'essuie-glaces pour assurer un lavage d'une vitre et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames d'essuyage réalisées en une matière élastique. Ces lames frottent contre la vitre et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure de la vitre, soit, dans une version plus récente dénommée « flat blade » (pour « lame plate »), d'un ensemble semi-rigide qui maintient la lame d'essuyage sur toute sa longueur grâce à une ou des vertèbres de cintrage permettant d'appliquer le balai sur la vitre sans avoir à utiliser d'étriers.

Dans le cas d'un « flat blade », le balai comprend un connecteur mécanique qui comprend ou porte une liaison pivot destinée à coopérer avec le bras ou un élément porté par le bras afin d'autoriser le pivotement du balai vis-à-vis du bras, par exemple pour faciliter le remplacement de la lame d'essuyage en cas d'usure.

Une liaison pivot est amovible lorsqu'elle est rapportée et fixée sur le connecteur mécanique et qu'elle peut être démontée de ce dernier. Dans la technique actuelle, une liaison pivot amovible pour un balai d'essuie-glace est simplement formée par un axe cylindrique, qui est en général reçu dans un logement cylindrique du connecteur.

Par ailleurs, il est connu d'équiper un balai d'essuie-glace de moyens de projection de liquide lave-glace sur la vitre à essuyer. Ces moyens de projection sont alimentés en liquide lave-glace par des moyens de distribution fluidique, qui sont en général formés dans le connecteur. US-A-2006/0265830 montre le préambule de la revendication 1.

La présente invention propose un perfectionnement à cette technologie qui permet notamment de simplifier la fabrication d'un connecteur pour un balai d'essuie-glace équipé de moyens de projection de fluide, et en particulier de liquide lave-glace.

L'invention propose à cet effet un ensemble comprenant un connecteur mécanique et une canule rapportée sur le connecteur, pour un balai d'essuie-glace d'une vitre de véhicule, en particulier automobile, le connecteur comprenant un orifice traversé par une partie d'extrémité de la canule, cette partie d'extrémité étant configurée pour être engagée dans un orifice d'un corps longitudinal dudit balai, en vue de l'alimentation en fluide d'une cavité dudit corps, le connecteur comprenant des moyens de fixation au corps longitudinal d'une lame d'essuyage du balai, ou au corps longitudinal d'un organe de support d'une lame d'essuyage du balai, lesdits moyens de fixation comprenant deux parois latérales inférieures sensiblement parallèles et reliées entre elles par une paroi supérieure dans laquelle est formé ledit orifice, le connecteur comprenant deux pattes latérales supérieures sensiblement parallèles et s'étendant depuis la paroi supérieure, du côté opposé aux parois latérales, ledit orifice étant situé entre les deux pattes de sorte que la canule soit située entre les deux pattes, les pattes comprenant des logements de réception, de préférence par encliquetage élastique, d'un axe sensiblement cylindrique formant une liaison pivot, caractérisé en ce que l'axe sensiblement cylindrique est formé d'une seule pièce avec la canule.

L'invention propose ainsi d'alimenter, par exemple en liquide lave glace, une cavité d'un corps du balai au moyen d'une canule qui traverse un orifice du connecteur. Le connecteur mécanique peut ainsi lui-même être dépourvu de moyens d'alimentation fluidique, ce qui permet de simplifier sa fabrication.

L'ensemble selon l'invention peut comprendre une ou plusieurs des caractéristiques ci-dessous, prises isolément les unes des autres ou en combinaison les unes avec les autres :
- le connecteur comprend au moins une encoche de réception d'une nervure anti-rotation en saillie sur ledit axe sensiblement cylindrique,
- ladite au moins une encoche est située dans un plan passant par l'axe de la canule et/ou l'axe sensiblement cylindrique,
- l'ensemble comprend en outre un bras d'entraînement dudit balai, le bras comportant au moins une patte, et de préférence deux pattes, la ou chaque patte comportant un logement de réception, de préférence par encliquetage élastique, et de rotation de l'axe sensiblement cylindrique,
- la canule est une canule de sortie de fluide et est raccordée à une canule d'entrée de fluide,
- les axes des canules sont sensiblement perpendiculaires entre eux et/ou audit axe sensiblement cylindrique,
- lesdits axes des canules s'étendent dans un plan sensiblement perpendiculaire audit axe sensiblement cylindrique et passant sensiblement au milieu de cet axe sensiblement cylindrique, et
- la canule d'entrée comprend une extrémité libre configurée pour être raccordée à un tuyau souple.

La présente invention concerne également un balai d'essuie-glace d'une vitre de véhicule, en particulier automobile, comprenant un ensemble tel que décrit ci-dessus.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique partielle en perspective éclatée d'un essuie-glace d'une vitre de véhicule, selon un mode de réalisation de l'invention,
- les figures 2 et 3 sont des vues schématiques respectivement en coupe transversale et en perspective d'une lame d'essuyage et de vertèbres de rigidification du balai de l'essuie-glace de la figure 1,
- les figures 4 et 5 sont des vues schématiques partielles en perspective du balai de l'essuie-glace de la figure 1 et représente l'ensemble comportant le connecteur mécanique et la liaison pivot de ce balai, et
- la figure 6 est une vue schématique partielle en perspective de l'essuie-glace de la figure 1.

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport à l'axe de rotation du balai, la dénomination intérieure correspondant à la partie du balai située du côté de cet axe de rotation. Enfin, les directions référencées comme supérieures ou inférieures correspondent à des orientations perpendiculaires au plan de rotation du balai, la dénomination inférieure contenant le plan de la vitre à essuyer.

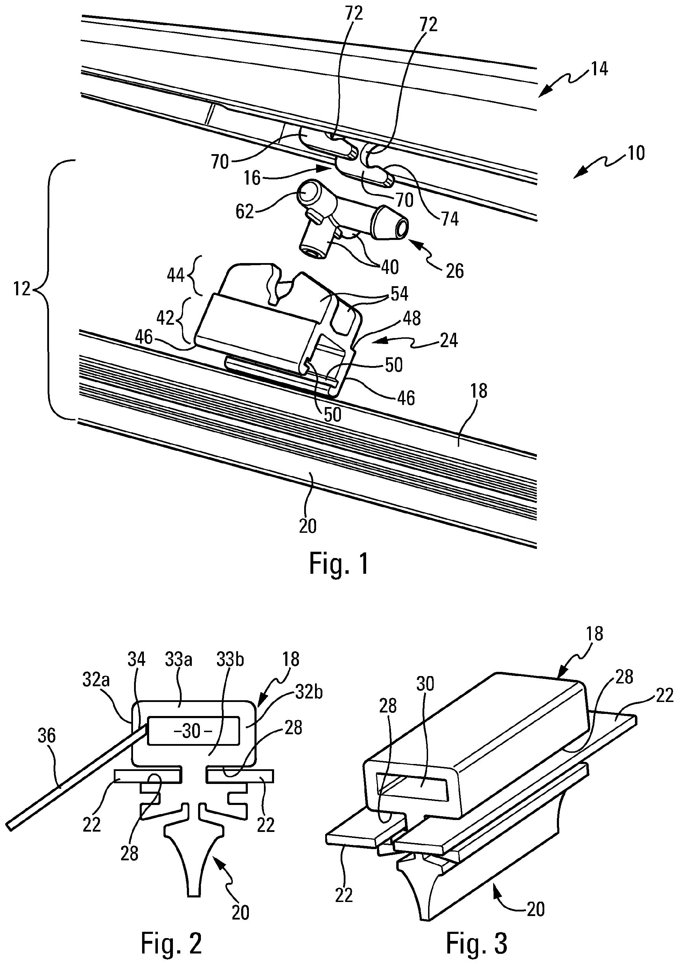

Les figures 1 à 6 illustrent un mode de réalisation de l'invention et montrent un essuie-glace 10 qui est particulièrement adapté mais non exclusivement pour l'essuyage d'une vitre arrière de véhicule automobile.

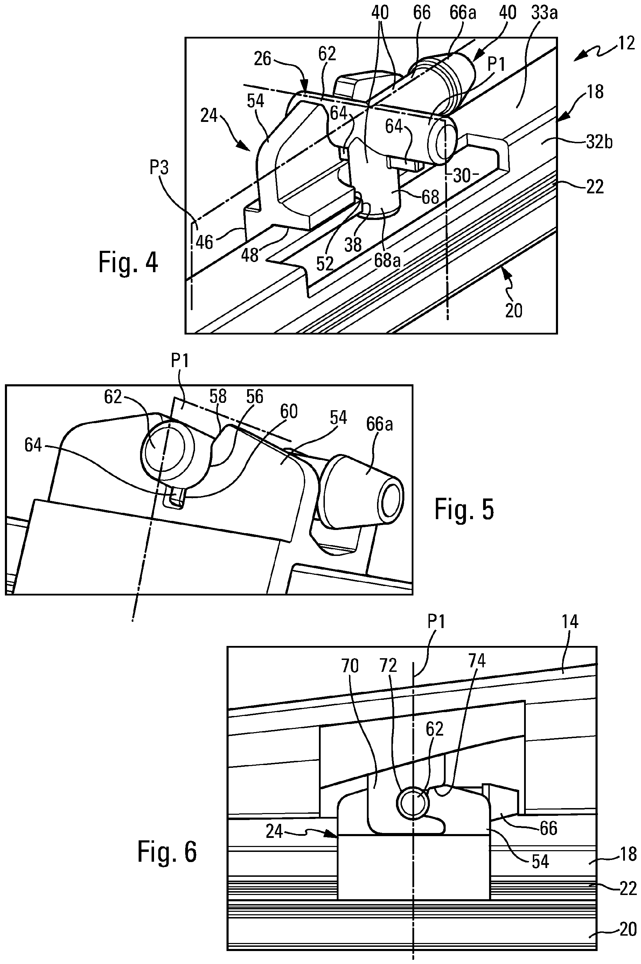

L'essuie-glace 10 comprend pour l'essentiel deux éléments : un balai longitudinal 12 et un bras longitudinal 14 d'entraînement du balai. Le bras 14, représenté aux figures 1 et 6, s'étend le long d'au moins une partie du balai pour le recouvrir et le protéger. Il comprend à une extrémité longitudinale (non visible) des moyens de fixation à un arbre d'un moteur électrique d'entraînement du bras, et comporte en outre des moyens 16 de fixation du balai, qui seront décrits plus en détail dans ce qui suit.

Le balai 12 comprend un corps longitudinal 18 portant une lame d'essuyage 20, au moins une et ici deux vertèbres de rigidification 22, un connecteur mécanique 24 équipé d'une liaison pivot 26 pour le raccordement du balai 12 au bras 14, et des embouts d'extrémité (non visibles).

La lame d'essuyage 20 est réalisée en caoutchouc et est destinée à frotter contre la vitre du véhicule pour évacuer l'eau en l'amenant en dehors du champ de vision du conducteur. Le corps 18 comporte des rainures longitudinales latérales 28 dans lesquelles sont logées respectivement les deux vertèbres 22 (figures 2 et 3). Ces vertèbres 22 sont parallèles et coplanaires et rigidifient la lame d'essuyage 20, de manière à favoriser son application sur la vitre. Le corps 18 et la lame 20 sont ici réalisés d'une seule pièce.

Le corps 18 est tubulaire et a en section une forme sensiblement rectangulaire. Le corps 18 comprend deux parois longitudinales latérales 32a, 32b sensiblement parallèles et reliées entre elles par deux parois longitudinales, respectivement supérieure 33a, et inférieure 33b, sensiblement parallèles.

Les parois du corps 18 définissent une cavité longitudinale interne 30 de circulation de liquide lave-glace. Au moins une des parois latérales 32a du corps est percée d'orifices 34 pour la projection de liquide lave-glace 36 sur la vitre à essuyer.

Comme cela est visible en figure 4, la paroi supérieure 33a du corps 18 (qui a ici été découpée pour plus de clarté) comprend un orifice 38 traversant de montage de moyens 40 de distribution fluidique, qui seront décrits plus en détail dans ce qui suit. Ces moyens de distribution 40 assurent l'alimentation en liquide lave-glace de la cavité 30 du corps 18.

Chaque embout d'extrémité est emboîté sur une extrémité longitudinale du corps 18 et sur les extrémités longitudinales correspondantes des vertèbres 22, et est destiné à maintenir ces dernières dans les rainures 28 du corps 18.

Le connecteur 24 comprend essentiellement deux parties : des moyens inférieurs 42 de fixation au corps 18 et des moyens supérieurs 44 de fixation de la liaison pivot 26.

Les moyens de fixation 42 ont en section transversale une forme sensiblement en U renversé et comprennent deux parois latérales longitudinales 46 sensiblement parallèles et à distance l'une de l'autre et qui sont reliées entre elles à leurs extrémités supérieures par une paroi supérieure 48. Les parois latérales 46 sont destinées à s'étendre de part et d'autre d'une partie du corps 18 et comportent chacune, une rainure longitudinale 50 de réception d'une partie d'extrémité longitudinale d'une vertèbre 22. L'insertion des vertèbres 22 dans les rainures 28 du corps 18 et les rainures 50 du connecteur 24 assure la fixation du connecteur au corps.

La paroi supérieure 48 du connecteur 24 est sensiblement plane et s'étend au-dessus de la paroi supérieure 33a du corps, sensiblement parallèlement à celle-ci. En position de montage, les parois 48, 33a peuvent être en contact.

La paroi 48 comprend un orifice 52 qui est aligné avec l'orifice du corps 18 pour le passage des moyens 40 de distribution fluidique. L'orifice 52 a un diamètre qui est ici supérieur à celui de l'orifice 38.

Les moyens de fixation 44 ont en section transversale une forme sensiblement en U et comprennent deux pattes latérales longitudinales 54 sensiblement parallèles et à distance l'une de l'autre et qui sont reliées entre elles à leurs extrémités inférieures par la paroi supérieure 48. Les pattes latérales 54 sont destinées à s'étendre de part et d'autre du débouché supérieur de l'orifice 52 de la paroi supérieure 48.

Chaque patte 54 comprend un logement 56 de réception, ici par encliquetage élastique, d'une partie de la liaison pivot 26 (figure 5). Chaque logement 56 a une forme générale cylindrique. Les logements 56 sont coaxiaux. Chaque logement 56 débouche sur un bord longitudinal supérieur de la patte 54 correspondante par l'intermédiaire d'une ouverture radiale 58 (ici évasée vers le haut). De plus, chaque logement 56 comprend une encoche 60 sensiblement radiale. L'encoche 60 s'étend sensiblement radialement et est diamétralement opposée par rapport à l'ouverture 58.

On note P1 le plan transversal, sensiblement vertical, passant par le milieu des encoches 60, des logements 56 et des ouvertures 58, et passant en outre par le milieu de l'orifice 52.

La liaison pivot 26 comprend pour l'essentiel deux parties : un axe transversal 62 sensiblement cylindrique et les moyens 40 précités de distribution fluidique.

L'axe 62 est destiné à être engagé par encliquetage élastique dans les logements 56 du connecteur. Il a une longueur supérieure à la largeur ou dimension transversale des moyens de fixation supérieurs 44 du connecteur 24 de façon à ce que les parties d'extrémité longitudinale de l'axe 62 soient en saillie sur les faces latérales externes des pattes 54 du connecteur, comme cela est visible en figure 5 notamment.

Des nervures anti-rotation 64 sont prévues en saillie sur l'axe 62 pour coopérer avec les encoches 60 du connecteur. Les nervures 64 ont une orientation longitudinale et s'étendent vers le bas depuis l'axe 62. Une de leurs extrémités longitudinales est reliée aux moyens de distribution 40 et l'autre de leurs extrémités longitudinales est libre et destinée à être engagée dans une encoche 60. Les nervures 64 coopèrent par butée avec les bords des encoches 60 pour empêcher toute rotation de l'axe 62 dans les logements 56, et ainsi toute rotation de la liaison pivot 26 vis-à-vis du connecteur 24.

En position de montage représentée en figure 5, l'extrémité libre de chaque nervure 64 est sensiblement alignée avec la face latérale externe de la patte 54 correspondante du connecteur 24.

Les moyens 40 de distribution fluidique comprennent ici deux canules, respectivement d'entrée 66 et de sortie 68 de fluide (liquide lave-glace). Les canules 66, 68 sont tubulaires et sensiblement cylindriques. Elles ont chacune une orientation rectiligne. Les axes des cannelures 66, 68 sont sensiblement perpendiculaires. Ils sont en outre sensiblement perpendiculaires à l'axe 62. Ils s'étendent dans un plan P3 passant sensiblement au milieu de l'axe 62.

La canule d'entrée 66 est ici sensiblement horizontale en position de montage et comprend une extrémité longitudinale raccordée par l'intermédiaire de l'axe 62 à une extrémité longitudinale supérieure de la canule de sortie 68. La partie d'extrémité longitudinale 66a de la canule d'entrée 66, opposée à l'axe 62, est configurée pour être emboîtée dans une extrémité d'un tuyau souple et est ici conformée pour faciliter et maintenir cet emboîtement. La partie d'extrémité longitudinale inférieure 68a de la canule de sortie 68 est configurée pour traverser avec jeu l'orifice 52 du connecteur 24 et pour être emboîtée sans jeu ou avec ajustement serré dans l'orifice 38 du corps 18 (figure 4).

Les canules 66, 68 sont ici raccordées entre elles par une partie médiane de l'axe 62 qui comprend un passage interne (non visible) de raccordement fluidique des canules. En position de montage, les canules 66, 68 s'étendent entre les pattes latérales 54 du connecteur 24.

La liaison pivot comportant les canules 66, 68, les nervures 64 et l'axe 62, est ici formée d'une seule pièce.

Les figures 1 et 6 montrent les moyens 16 de fixation et d'articulation du bras 14 au balai 12, et en particulier à la liaison pivot 26 porté par le balai.

Dans l'exemple représenté, le bras 14 comprend deux pattes latérales inférieures 70 comportant chacune un logement 72 de réception, ici par encliquetage élastique, d'une partie d'extrémité longitudinale de l'axe 62. Les pattes 70 sont sensiblement parallèles et ont une orientation sensiblement longitudinale. Elles sont écartées en direction transversale l'une de l'autre d'une distance supérieure à la largeur ou dimension transversale des moyens de fixation 44 du connecteur 24 mais inférieure à la longueur de l'axe 62 pour autoriser le montage précité.

Les logements 72 ont un diamètre légèrement supérieur à celui de l'axe 62 pour autoriser sa rotation et donc un pivotement du balai vis-à-vis du bras.

Le logement 72 de chaque patte 70 est ici relié à une ouverture 74 sensiblement radiale (par rapport à l'axe transversal du logement) qui débouche ici sur un bord intérieur de la patte 70. Les parties d'extrémité de l'axe 62 sont engagées dans les logements 72 en passant par les ouvertures 74. On comprend ainsi que le balai 12 est monté sur le bras 14 en déplaçant en translation le balai vis-à-vis du bras dans une direction parallèle à l'axe longitudinal du balai, jusqu'à ce que l'axe 62 soit reçu par encliquetage élastique dans les logements 72 des pattes 70. Ceci permet de prévoir deux directions différentes pour le montage de la liaison pivot 26 sur le connecteur 24 et pour le montage du bras sur le balai, le démontage du bras vis-à-vis du balai par translation longitudinale de l'un par rapport à l'autre ne risquant pas d'entraîner un démontage involontaire de la liaison pivot 26 vis-à-vis du connecteur 24.

En variante, le logement 72 de chaque patte 70 peut être relié à une ouverture débouchant ici sur un bord inférieur de la patte, de façon à ce que le balai 12 soit monté sur le bras 14 en déplaçant en translation le balai vis-à-vis du bras dans une direction sensiblement parallèle à l'axe de la canule 68, jusqu'à ce que l'axe 62 soit reçu par encliquetage élastique dans les logements 72 des pattes 70. La force nécessaire pour retirer et démonter le balai du bras est alors de préférence inférieure à celle nécessaire pour démonter la liaison pivot du connecteur, de façon à ce que la séparation du balai du bras, par traction de l'un par rapport à l'autre dans une direction parallèle à l'axe de la canule 68, n'entraîne pas forcément le démontage de la liaison pivot 26 du connecteur 24.

L'essuie-glace 10 selon l'invention peut être monté de la façon suivante. Le connecteur 24 est disposé sur le corps 18 de sorte que ses parois latérales inférieures 46 s'étendent de part et d'autre du corps 18 et que ses rainures 50 soient situées en regard des rainures 28 du corps. Les vertèbres 22 sont engagées dans les rainures 28, 50 en les faisant coulisser longitudinalement, ce qui assure la retenue et la fixation du connecteur 24 vis-à-vis du corps 18. Les embouts d'extrémité sont assemblés pour maintenir l'ensemble. La liaison pivot 26 est rapportée et fixée sur le connecteur 24 en la présentant comme illustré en figure 1 et en la déplaçant en translation, du haut vers le bas, dans une direction parallèle à l'axe des orifices 52, 38, jusqu'à ce que la canule de sortie 68 pénètre dans l'orifice 38 du corps 18 et que l'axe 62 soit logé dans les logements 56 du connecteur. Enfin, le balai 12 est fixé au bras 12 comme expliqué dans ce qui précède.

## Revendications

1. Ensemble comprenant un connecteur mécanique (24) et une canule (68) rapportée sur le connecteur, pour un balai (12) d'essuie-glace (10) d'une vitre de véhicule, en particulier automobile, le connecteur comprend un orifice (52) traversé par une partie d'extrémité (68a) de la canule, cette partie d'extrémité étant configurée pour être engagée dans un orifice (38) d'un corps longitudinal (18) dudit balai, en vue de l'alimentation en fluide d'une cavité (30) dudit corps, le connecteur (24) comprenant des moyens (42) de fixation au corps longitudinal (18) d'une lame d'essuyage (14) du balai, ou au corps longitudinal d'un organe de support d'une lame d'essuyage du balai, lesdits moyens de fixation (42) comprenant deux parois latérales inférieures (46) sensiblement parallèles et reliées entre elles par une paroi supérieure (48) dans laquelle est formé ledit orifice (52), le connecteur (24) comprenant deux pattes latérales supérieures (54) sensiblement parallèles et s'étendant depuis la paroi supérieure (48), du côté opposé aux parois latérales (46), ledit orifice (52) étant situé entre les deux pattes latérales supérieures (54) de sorte que la canule (68) soit située entre les deux pattes latérales supérieures (54), les pattes latérales supérieures (54) comprenant des logements (56) de réception, de préférence par encliquetage élastique, d'un axe (62) sensiblement cylindrique formant une liaison pivot (26), **caractérisé en ce que** l'axe (62) sensiblement cylindrique est formé d'une seule pièce avec la canule (68).

2. Ensemble selon la revendication 1, **caractérisé en ce que** le connecteur (24) comprend au moins une encoche (60) de réception d'une nervure anti-rotation (64) en saillie sur ledit axe (62) sensiblement cylindrique.

3. Ensemble selon la revendication 2, **caractérisé en ce que** ladite au moins une encoche (60) est située dans un plan (P1) passant par l'axe de la canule (68) et/ou l'axe (62) sensiblement cylindrique.

4. Ensemble selon l'une des revendications précédentes, **caractérisé en ce qu'**il comprend en outre un bras (14) d'entraînement dudit balai (12), le bras comportant au moins une patte (70), et de préférence deux pattes, la ou chaque patte comportant un logement (72) de réception, de préférence par encliquetage élastique, et de rotation de l'axe (62) sensiblement cylindrique.

5. Ensemble selon l'une des revendications précédentes, **caractérisé en ce que** la canule (68) est une canule de sortie de fluide et est raccordée à une canule (66) d'entrée de fluide.

6. Ensemble selon la revendication 5, **caractérisé en ce que** les axes des canules (66, 68) sont sensiblement perpendiculaires entre eux et/ou audit axe (62) sensiblement cylindrique.

7. Ensemble selon la revendication 6, **caractérisé en ce que** lesdits axes des canules (66, 68) s'étendent dans un plan (P3) sensiblement perpendiculaire audit axe (62) sensiblement cylindrique et passant sensiblement au milieu de cet axe sensiblement cylindrique.

8. Ensemble selon l'une des revendications 5 à 7, **caractérisé en ce que** la canule d'entrée (66) comprend une extrémité libre (66a) configurée pour être raccordée à un tuyau souple.

9. Balai (12) d'essuie-glace (10) d'une vitre de véhicule, en particulier automobile, comprenant un ensemble selon l'une des revendications 1 à 3 et 5 à 8.

## Patentansprüche

1. Einheit, die einen mechanischen Anschluss (24) und eine Kanüle (68), die auf dem Anschluss angefügt ist, für ein Blatt (12) eines Scheibenwischers (10) einer Scheibe eines Fahrzeugs, insbesondere eines Kraftfahrzeugs, umfasst, wobei der Anschluss eine Öffnung (52) umfasst, die von einem Endteil (68a) der Kanüle durchquert wird, wobei dieser Endteil ausgelegt ist, um in einer Öffnung (38) eines Längskörpers (18) des Blatts zur Fluidversorgung eines Hohlraums (30) des Körpers eingefügt zu sein, wobei der Anschluss (24) Mittel (42) zum Befestigen an dem Längskörper (18) eines Wischgummis (14) des Blatts oder an dem Längskörper eines Tragelements eines Wischblatts des Blatts umfasst, wobei die Befestigungsmittel (42) zwei seitliche untere Wände (46) umfassen, die im Wesentlichen parallel und miteinander durch eine obere Wand (48) verbunden sind, in der eine Öffnung (52) gebildet ist, wobei der Anschluss (24) zwei obere seitliche Pratzen (54) umfasst, die im Wesentlichen parallel sind und sich von der oberen Wand (48) von der Seite, die den seitlichen Wänden (46) entgegengesetzt ist, erstrecken, wobei die Öffnung (52) zwischen den zwei oberen seitlichen Pratzen (54) derart liegt, dass die Kanüle (68) zwischen den zwei oberen seitlichen Pratzen (54) liegt, wobei die oberen seitlichen Pratzen (54) Aufnahmen (56) zum Aufnehmen, bevorzugt durch elastisches Einrasten, einer im Wesentlichen zylindrischen Achse (62), die eine Schwenkverbindung (26) bildet, umfassen, **dadurch gekennzeichnet, dass** die im Wesentlichen zylindrische Achse (62) aus einem einzigen Stück mit der Kanüle (68) gebildet ist.

2. Einheit nach Anspruch 1, **dadurch gekennzeichnet, dass** der Anschluss (24) mindestens eine Kerbe (60) zum Aufnehmen einer Drehschutzrippe (64), die auf der im Wesentlichen zylindrischen Achse (62) vorragt, umfasst.

3. Einheit nach Anspruch 2, **dadurch gekennzeichnet, dass** die mindestens eine Kerbe (60) in einer Ebene (P1) liegt, die durch die Achse der Kanüle (68) und/oder die im Wesentlichen zylindrische Achse (62) durchgeht.

4. Einheit nach einem der vorstehenden Ansprüche, **dadurch gekennzeichnet, dass** sie außerdem einen Arm (14) zum Antreiben des Blatts (12) umfasst, wobei der Arm mindestens eine Pratze (70) und bevorzugt zwei Pratzen umfasst, wobei die oder jede Pratze eine Aufnahme (72) zum Aufnehmen, bevorzugt durch elastisches Einrasten, und Drehen der im Wesentlichen zylindrischen Achse (62) umfasst.

5. Einheit nach einem der vorstehenden Ansprüche, **dadurch gekennzeichnet, dass** die Kanüle (68) eine Fluidausgangskanüle ist und an eine Fluideingangskanüle (66) angeschlossen ist.

6. Einheit nach Anspruch 5, **dadurch gekennzeichnet, dass** die Achsen der Kanülen (66, 68) im Wesentlichen zueinander und/oder zu der im Wesentlichen zylindrischen Achse (62) senkrecht stehen.

7. Einheit nach Anspruch 6, **dadurch gekennzeichnet, dass** sich die Achsen der Kanülen (66, 68) in einer Ebene (P3) erstrecken, die im Wesentlichen zu der im Wesentlichen zylindrischen Achse (62) senkrecht steht und im Wesentlichen in der Mitte dieser im Wesentlichen zylindrischen Achse durchgeht.

8. Einheit nach einem der Ansprüche 5 bis 7, **dadurch gekennzeichnet, dass** die Eingangskanüle (66) ein freies Ende (66a) umfasst, das ausgelegt ist, um an einen Schlauch angeschlossen zu sein.

9. Blatt (12) eines Scheibenwischers (10) einer Scheibe eines Fahrzeugs, insbesondere eines Kraftfahrzeugs, das eine Einheit nach einem der Ansprüche 1 bis 3 und 5 bis 8 umfasst.

## Claims

1. Assembly comprising a mechanical connector (24) and a narrow channel (68) connected to the connector, for a windscreen (10) wiper (12) of a vehicle window, in particular a motor vehicle window, the connector comprises an orifice (52) traversed by an end part (68a) of the narrow channel, said end part being configured so as to be engaged in an orifice (38) of a longitudinal body (18) of said wiper, for the purpose of supplying fluid to a cavity (30) of said body, the connector (24) comprising means for fixing (42) to the longitudinal body (18) of a wiper blade (14) of the wiper or to the longitudinal body of a support member of a wiper blade of the wiper, said means for fixing (42) comprising two lower lateral walls (46) which are substantially parallel and connected together by an upper wall (48) in which said orifice (52) is formed, the connector (24) comprising two upper lateral tabs (54) which are substantially parallel and extend from the upper wall (48), on the side opposing the lateral walls (46), said orifice (52) being located between the two upper lateral tabs such that the narrow channel (68) is located between the two upper lateral tabs, the upper lateral tabs (54) comprising housings (56) for receiving, preferably by resilient clipping, a substantially cylindrical pin (62) forming a pivot connection (26), **characterized in that** the substantially cylindrical pin (62) is formed in one piece with the narrow channel (68).

2. Assembly according to Claim 1, **characterized in that** the connector (24) comprises at least one notch (60) for receiving an anti-rotation rib (64) protruding over said substantially cylindrical pin (62).

3. Assembly according to Claim 2, **characterized in that** said at least one notch (60) is located in a plane (P1) passing through the axis of the narrow channel (68) and/or the substantially cylindrical pin (62).

4. Assembly according to one of the preceding claims, **characterized in that** it further comprises an arm (14) for driving said wiper (12), the arm comprising at least one tab (70), and preferably two tabs, the or each tab comprising a housing (72) for receiving, preferably by resilient clipping, and for rotating the substantially cylindrical pin (62).

5. Assembly according to one of the preceding claims, **characterized in that** the narrow channel (68) is a narrow fluid outlet channel and is connected to a narrow fluid inlet channel (66).

6. Assembly according to Claim 5, **characterized in that** the axes of the narrow channels (66, 68) are substantially perpendicular to one another and/or to said substantially cylindrical pin (62).

7. Assembly according to Claim 6, **characterized in that** said axes of the narrow channels (66, 68) extend in a plane (P3) substantially perpendicular to said substantially cylindrical pin (62) and pass substantially in the centre of said substantially cylindrical pin.

8. Assembly according to one of Claims 5 to 7, **characterized in that** the narrow inlet channel (66) comprises a free end (66a) which is configured so as to be connected to a flexible pipe.

9. Windscreen (10) wiper (12) of a vehicle window, in particular of a motor vehicle, comprising an assembly according to one of Claims 1 to 3 and 5 to 8.
